# FASCICULE DE BREVET EUROPEEN

(11) **EP 3 158 709 B1**
(45) Date de publication et mention de la délivrance du brevet: **27.11.2024**
(21) Numéro de dépôt: 15732859.2
(22) Date de dépôt: 11.06.2015
(51) Int. Cl.: H04L 65/1069, H04L 65/1016, H04L 65/1104, H04L 69/24

(54) **SÉLECTION DYNAMIQUE PAR UN APPELANT PARMI UNE PLURALITÉ DE TERMINAUX D'UN APPELÉ**
DYNAMISCHE AUSWAHL SEITENS EINES ANRUFERS AUS EINER VIELZAHL VON ENDGERÄTEN EINES ANGERUFENEN
DYNAMIC SELECTION, BY A CALLER, FROM A PLURALITY OF TERMINALS OF A CALLEE

(30) Priorité: 23.06.2014 FR 1455820
(43) Date de publication de la demande: 26.04.2017
(73) Titulaire: Orange, 92130 Issy-les-Moulineaux (FR)
(72) Inventeur: LE ROUZIC, Jean-Claude, F-22560 Trebeurden (FR); DOREE, José, F-22300 Lannion (FR)
(86) Numéro de dépôt international: PCT/FR2015/051545
(87) Numéro de publication internationale: WO 2015/197937

(56) Documents cités:
- US-A1- 2006 218 291
- US-A1- 2011 019 650
- US-A1- 2011 314 140
- "IMS IP Multimedia Concepts and Services", 17 March 2009, JOHN WILEY & SONS, Chichester, GB, ISBN: 978-0-47-072196-4, article MIIKKA POIKSELKÄ ET AL: "Media Negotiation", pages: 362 - 373, XP055174026
- ROSENBERG J ET AL: "SIP: Session Initiation Protocol", 20020601; 20020600, 1 June 2002 (2002-06-01), pages 1 - 269, XP015009039
- "IMS IP Multimedia Concepts and Services", 1 January 2009, JOHN WILEY & SONS, Chichester, GB, ISBN: 978-0-47-072196-4, article MIIKKA POIKSELKÄ: "IMS : IP Multimedia Concepts and Services (3rd Edition)", pages: 57 - 58, XP055211849

## Description

La présente invention concerne les réseaux de communications de type IP (« *Internet Protocol* »), et notamment ceux parmi les réseaux IP qui sont aptes à mettre en oeuvre des protocoles de contrôle de session évolués. Les réseaux IP permettent la diffusion de données conversationnelles, dans le cadre de services tels que « Voix sur IP » (VoIP), « Partage de Contenu », ou « Messagerie Instantanée ».

Plus particulièrement, la présente invention concerne les moyens mis en place dans un réseau IP pour permettre à l'émetteur d'une requête d'obtenir les capacités techniques des dispositifs-clients du destinataire de la requête connectés audit réseau IP, de manière à pouvoir sélectionner, parmi ces dispositifs-clients, celui qui paraît le plus apte à satisfaire cette requête.

Ces « dispositifs-clients » peuvent être, par exemple, un terminal fixe ou mobile, ou une passerelle soit domestique (« *Residential Gateway* » en anglais) soit située dans une entreprise. Par souci de brièveté, on utilisera fréquemment ci-dessous le terme générique de « terminal d'utilisateur », ou de « terminal » tout court, pour désigner ces divers équipements.

Les services de communication sur réseau IP peuvent identifier des ressources physiques ou virtuelles au moyen de chaînes de caractères telles qu'une « URI » (initiales des mots anglais « *Uniform Resource Identifier* » signifiant « Identifiant Uniforme de Ressource »). La syntaxe des URIs est définie dans le document RFC 3986 de l'IETF ; la connaissance de l'URI d'une ressource permet d'obtenir l'adresse IP d'un équipement du réseau de l'opérateur gérant cette ressource. Dans la présente description, nous appellerons « URI » tout type d'identifiant de ressource applicative physique ou virtuelle accessible sur un réseau.

Les protocoles de contrôle de session évolués classiques, tels que le protocole SIP (initiales des mots anglais « *Session Initiation Protocol »* signifiant « Protocole d'initiation de Session »), utilisent des messages dits de « signalisation », qui sont des messages permettant à un terminal de demander une connexion avec un autre terminal, ou également des messages signalant qu'une ligne téléphonique est occupée, ou signalant que le téléphone appelé sonne, ou encore signalant que tel téléphone est connecté au réseau et peut être joint de telle ou telle manière.

Le protocole SIP a été défini par l'IETF (*Internet Engineering Task Force*) dans le document RFC 3261. Ce protocole permet l'établissement, la modification et la terminaison de sessions multimédia dans un réseau utilisant le protocole IP. Le protocole SIP a ensuite été étendu notamment dans le document RFC 3265. Cette extension définit des procédures de notification d'événements.

Le protocole SIP est utilisé en particulier dans les infrastructures de type IMS (initiales des mots anglais « *IP Multimedia Subsystem* » signifiant « Sous-système Multimédia sur IP »). L'IMS a été défini par l'organisme de normalisation 3GPP (« *Third Génération Partnership Project* ») et TISPAN (« *Télécommunications and Internet Converged Services and Protocols for Advanced Networking* »)*.* C'est une architecture de réseau introduite par le 3GPP pour les réseaux mobiles, puis reprise par TISPAN pour les réseaux fixes. Cette architecture permet l'établissement dynamique et le contrôle de sessions multimédia entre deux clients ainsi que la réservation des ressources au niveau du réseau de transport des flux multimédias. Grâce à cette architecture, les opérateurs réseau peuvent commodément mettre en oeuvre une politique de gestion, fournir une Qualité de Service prédéterminée, et calculer les montants à facturer aux clients. L'IMS permet actuellement d'accéder à des services de type téléphonie, visiophonie, Présence et Messagerie Instantanée, dont elle gère aussi l'interaction.

Chaque usager d'un réseau IMS peut y être identifié au moyen de diverses identités, dont notamment l'IMPI (initiales des mots anglais « *IP Multimedia Private Identity* » signifiant « Identité Privée pour IP Multimédia ») et l'IMPU (initiales des mots anglais « *IP Multimedia PUblic identity »* signifiant « Identité Publique pour IP Multimédia »).

L'IMPI est défini dans la spécification TS 23.228 du 3GPP. L'IMPI est une identité affectée de manière permanente par l'opérateur d'un réseau à une souscription auprès de cet opérateur, et est utilisé, par exemple, pour l'enregistrement, l'autorisation d'accès, l'administration des services offerts à l'usager, et la facturation (on notera qu'un usager peut avoir plusieurs IMPI au sein de la même souscription ; on peut ainsi associer chaque IMPI à un dispositif-client différent). L'IMPI a la forme d'un NAI (initiales des mots anglais « *Network Access Identifier »* signifiant « Identifiant d'Accès Réseau »), tel que défini dans le document RFC 4282 de l'IETF.

Un usager se sert de son IMPU pour communiquer avec d'autres usagers. L'IMPU se présente sous la forme d'une URI ou d'un numéro court, ou encore d'un alias quelconque. Pour un IMPI donné, il peut y avoir plusieurs IMPU (souvent, une tel-URI et une SIP-URI). Un IMPU peut être partagé avec un autre téléphone, de manière à ce que ces téléphones puissent être tous les deux joints avec la même identité (par exemple, un numéro de téléphone unique pour toute une famille d'usagers). Ces identités sont configurées par l'opérateur lors de la création par un usager d'un compte auprès de cet opérateur, et exploitées lors de l'enregistrement d'un dispositif-client de l'usager sur le réseau.

Lorsque donc un usager souhaite bénéficier des services offerts par un réseau IMS, il émet vers le réseau des messages de signalisation pouvant inclure notamment divers types de requêtes.

Tout d'abord, le dispositif-client de l'usager doit, sauf exceptions (telles que certains appels d'urgence), s'enregistrer sur le réseau. Lorsque le réseau est incapable de faire le lien entre cet enregistrement et un enregistrement précédent (par exemple suite à une panne réseau, ou suite à un arrêt du dispositif-client pendant une durée supérieure à une valeur prédéterminée), l'enregistrement est considéré comme étant un enregistrement initial. Après un enregistrement initial, le dispositif-client de l'usager doit envoyer périodiquement au réseau une requête pour confirmer qu'il souhaite maintenir son enregistrement.

Pour pouvoir enregistrer les dispositifs-clients, les réseaux IMS comprennent un ou plusieurs serveurs d'enregistrement, appelés « S-CSCF » (initiales des mots anglais *« Serving-Call Server Control Function* » signifiant « Fonction de Commande de Session d'Appel Serveuse »), aptes (entre autres fonctions) à gérer la procédure d'enregistrement des dispositifs connectés au réseau.

Les réseaux IMS comprennent en outre un ou plusieurs serveurs d'interrogation, appelés « I-CSCF » (initiales des mots anglais « *Interrogating-Call Server Control Function* » signifiant « Fonction de Commande de Session d'Appel Interrogatrice ») - d'ailleurs souvent combinés physiquement avec les serveurs d'enregistrement S-CSCF pour constituer des serveurs d'appel dénotés « I/S-CSCF » - qui, au moment de l'enregistrement d'un dispositif-client, interrogent un serveur de données d'abonné appelé « HSS » (initiales des mots anglais « *Home Subscriber Server»* signifiant « Serveur d'Abonné de Rattachement »), afin de pouvoir sélectionner un serveur S-CSCF possédant les caractéristiques qui sont obligatoirement (et, le cas échéant, optionnellement) requises pour atteindre le niveau de service souscrit par l'usager. Les serveurs HSS contiennent chacun une base de données-clients, et sont donc l'équivalent dans les réseaux IP des serveurs « HLR » (initiales des mots anglais « *Home Location Register* » signifiant « Registre de Localisation de Rattachement ») utilisés dans les réseaux GSM. Chaque serveur HSS contient le « profil » d'un certain nombre de dispositifs-clients du réseau, ce profil comprenant leur état d'enregistrement, des données d'authentification et de localisation, et les services souscrits.

Dans le processus de création d'un compte d'usager sur un réseau IMS, l'opérateur du réseau crée d'abord dans le HSS une souscription IMS, qui servira de fondement à la facturation. L'opérateur note ensuite, en référence à cette souscription, les identités privées IMPI et publiques IMPU des usagers partageant cette souscription, déclare leurs profils de services et les IFC (initiales des mots anglais « *Initial Filter Criteria »* signifiant Critères de Filtrage Initiaux) associés, ainsi que de nombreuses autres informations relatives aux usagers.

Les réseaux IMS comprennent en outre un ou plusieurs serveurs appelés « P-CSCF » (initiales des mots anglais « *Proxy-Call Server Control Function »* signifiant « Fonction de Commande de Session d'Appel Mandataire »). Pour chaque dispositif-client connecté à un réseau IMS, il existe un serveur P-CSCF servant d'entité de raccordement entre le coeur de réseau IMS et le réseau d'accès utilisé par ce dispositif-client ; ainsi, toute la signalisation SIP échangée entre le dispositif-client d'une part, et le serveur d'interrogation I-CSCF ou le serveur d'enregistrement S-CSCF d'autre part, passe par le serveur P-CSCF.

Lorsqu'un premier usager (dit « appelant ») émet une requête à destination d'un second usager (dit « appelé »), l'appelant ne connaît pas (en général) les capacités du terminal de l'appelé, ou les capacités des terminaux de l'appelé lorsque ce dernier possède plusieurs terminaux (typiquement, associés chacun à un IMPI respectif mais à un unique IMPU commun). Par « capacités d'un terminal », on entend, dans le cadre de la présente invention, la capacité technique de ce terminal à participer à la fourniture d'un service particulier, par exemple un service téléphonique, ou un service de Voix Haute Définition (HD), ou un service vidéo, ou encore un service de messagerie instantanée. Or la connaissance de ces capacités techniques serait fort utile à l'appelant, car cela lui permettrait de savoir :
1) si l'un des terminaux de l'appelé possède des capacités suffisantes pour le service souhaité par l'appelant, et
2) s'il existe un tel terminal, l'identité de ce terminal ou comment le joindre.

On connaît dans l'état de l'art diverses propositions visant à résoudre ce problème.

On connaît en particulier des solutions réseaux à base de « serveurs d'applications » agrégeant les capacités de chacun des terminaux connectés d'un usager. Mais ces solutions ne reflètent pas les capacités de chacun des terminaux connectés à un instant donné, car c'est l'agrégation des capacités de l'ensemble des terminaux qui est présentée, et non les capacités individuelles de chacun des terminaux.

D'autres solutions, à base de *« forking »* (c'est-à-dire de transmission d'un signal de contrôle à une pluralité de terminaux destinataires), permettent d'explorer les capacités d'une partie au moins des terminaux connectés, en leur envoyant une requête dédiée.

Par exemple, la demande US 2011/314140 propose un procédé pour le traitement d'un message de requête de capacité SIP OPTIONS dans un réseau IMS. Un proxy SIP reçoit, de la part d'un noeud demandeur, un message SIP OPTIONS destiné à un usager, dit appelé, du réseau (on rappelle que, selon le document RFC 3261 précité, une requête SIP OPTIONS permet à un agent SIP de demander à un autre agent SIP ou à un proxy SIP de lui fournir ses capacités). Le proxy envoie le message à une pluralité de dispositifs dudit appelé, et reçoit une réponse (SIP 200 OK) de la part d'au moins deux de ces dispositifs. Chaque réponse reçue, qui inclut une identité du dispositif répondant et une indication des capacités du dispositif répondant, est stockée dans une mémoire. Le proxy confectionne ensuite un message de réponse contenant les identités et les capacités de tous les dispositifs répondants. Enfin, ce message de réponse est envoyé au noeud demandeur (en effet, selon les Sections 11.2 et 16.7 du document RFC 3261, le proxy ne peut envoyer qu'une seule réponse au noeud demandeur).

Ce procédé selon la demande US 2011/314140 a pour inconvénient que la procédure d'agrégation et de stockage temporaire des réponses requiert des moyens *ad hoc* dans le proxy, et de plus impose au noeud demandeur un délai considérable avant de recevoir les capacités demandées.

La section intitulée « Media Negotiation » du document de Mikka Poikselkâ et al. « IMS IP Multimedia Concepts and Services », 17 mars 2009, John Wiley & Sons, décrit l'établissement d'une session normale entre deux téléphones connectés à un réseau IMS via une technologie GPRS.

Le document US 2006/0218291 A1 décrit un procédé permettant un échange de capacités de bout en bout entre deux dispositifs clients d'usagers. Ce document souligne notamment que cet échange permet de remédier à la situation où plusieurs dispositifs clients d'un même usager partagent une même identité publique (IMPU).

En résumé, aucune des solutions connues ne permet à un appelant de sélectionner efficacement le terminal appelé le plus apte à rendre correctement un service requis par l'appelant.

La présente invention concerne donc un procédé selon la revendication 1.

Ainsi, selon l'invention, chaque requête émise par un dispositif-client du second usager parvient au premier usager indépendamment l'une de l'autre.

Grâce à ces dispositions, un premier usager peut (par exemple lors de l'établissement d'une session) obtenir rapidement les capacités de chacun des terminaux appartenant à un certain second usager et connectés au réseau IP.

Selon des caractéristiques particulières, ledit procédé comprend en outre les étapes suivantes :
c) après réception desdites requêtes envoyés par des dispositifs-client du second usager, le dispositif-client du premier usager sélectionne l'un de ces dispositifs-client du second usager sur la base au moins des informations de capacités techniques contenues dans ces requêtes,
d) le dispositif-client du premier usager émet, à destination du dispositif-client sélectionné, une réponse favorable à la requête émise lors de ladite étape b) par ce dispositif-client sélectionné, et
e) le dispositif-client du premier usager et le dispositif-client sélectionné entrent en session.

Grâce à ces dispositions, le premier usager peut, sur la base des informations de capacité reçues, sélectionner le terminal du second usager le plus approprié pour rendre un service souhaité par le premier usager.

Selon des caractéristiques encore plus particulières :
- la requête émise par chaque dispositif-client respectif du second usager lors de ladite étape b) comprend un identifiant respectif de ce dispositif-client, et
- le dispositif-client du premier usager insère l'identifiant dudit dispositif-client sélectionné dans la réponse émise lors de ladite étape d) à destination de ce dispositif-client sélectionné.

Grâce à ces dispositions, le premier usager peut connaître les capacités techniques de tous les dispositifs-clients du second usager présentement connectés au réseau IP, avant même de tenter (éventuellement) d'établir une session avec ce second usager. Si par exemple aucun dispositif-client du second usager ne lui convient, le premier usager peut décider de ne pas tenter d'établir une session avec le second usager.

Selon d'autres caractéristiques encore plus particulières :
- ladite requête émise par le dispositif-client du premier usager lors de ladite étape a) mentionne un service que le premier usager souhaite obtenir au cours de la session en cours d'établissement, et
- lors de ladite étape d), le dispositif-client du premier usager émet une réponse défavorable aux requêtes envoyées lors de ladite étape b) par les dispositifs-clients du second usager non sélectionnés.

Grâce à ces dispositions, le premier usager peut, au moyen de l'indicateur selon l'invention, obtenir rapidement les informations nécessaires pour pouvoir choisir parmi les dispositifs-clients du second usager présentement connectés au réseau IP, le dispositif-client optimal avec qui établir une session. Ce mode de réalisation est bien adapté au cas où le premier usager sait que le second usager possède plusieurs dispositifs-clients présentement connectés au réseau IP.

Selon encore d'autres caractéristiques encore plus particulières :
- préalablement à ladite étape a), le dispositif-client du premier usager émet, à destination dudit second usager, une requête mentionnant un service que le premier usager souhaite obtenir au cours de la session en cours d'établissement, et
- lors de ladite étape d), le dispositif-client du premier usager émet une réponse défavorable aux requêtes envoyées lors de ladite étape b) par les dispositifs-clients du second usager non sélectionnés.

Grâce à ces dispositions, une première requête permet au premier usager d'obtenir une liste de dispositifs-clients appartenant au second usager et aptes à fournir le service souhaité, puis une deuxième requête permet au premier usager, au moyen de l'indicateur selon l'invention ou d'une requête d'un type dédié à l'invention, d'obtenir les informations nécessaires pour pouvoir choisir dans cette liste le dispositif-client optimal

avec qui établir une session. Ce mode de réalisation est bien adapté au cas où le premier usager n'est pas sûr à l'avance si le second usager possède ou non une pluralité de dispositifs-clients présentement connectés au réseau IP.

Selon encore d'autres caractéristiques encore plus particulières, si aucun dispositif-client du second usager ayant émis lors de ladite étape b) une requête indiquant ses capacités techniques n'est techniquement apte à fournir un service souhaité par le premier usager, le dispositif-client du premier usager sélectionne parmi ces dispositifs-clients du second usager, lors de ladite étape c), celui qui est le plus apte à fournir au premier usager un service de qualité réduite.

Grâce à ces dispositions, le premier usager peut établir une session avec le second usager dans les meilleures conditions possibles en pratique, compte tenu du service initialement souhaité.

Corrélativement, l'invention concerne divers dispositifs.

Elle concerne ainsi, premièrement, un dispositif-client, dit premier usager, d'un réseau IP selon la revendication 7.,

L'invention concerne aussi, deuxièmement, un dispositif-client d'un usager, dit second usager, d'un réseau IP, selon la revendication 8.

Les avantages offerts par ces dispositifs sont essentiellement les mêmes que ceux offerts par les procédés corrélatifs succinctement exposés ci-dessus.

On notera qu'il est possible de réaliser ces dispositifs dans le contexte d'instructions logicielles et/ou dans le contexte de circuits électroniques.

L'invention vise également un programme d'ordinateur téléchargeable depuis un réseau de communication et/ou stocké sur un support lisible par ordinateur et/ou exécutable par un microprocesseur. Ce programme d'ordinateur est remarquable en ce qu'il comprend des instructions pour l'exécution des étapes du procédé de sélection succinctement exposé ci-dessus, lorsqu'il est exécuté sur un ordinateur.

Les avantages offerts par ce programme d'ordinateur sont essentiellement les mêmes que ceux offerts par ledit procédé.

D'autres aspects et avantages de l'invention apparaîtront à la lecture de la description détaillée ci-dessous de modes de réalisation particuliers, donnés à titre d'exemples non limitatifs. La description se réfère aux figures qui l'accompagnent, dans lesquelles :
- la figure 1 représente schématiquement un système pour la fourniture de services multimédia apte à mettre en oeuvre l'invention, et
- la figure 2 représente schématiquement un mode de réalisation de l'invention dans lequel un usager A d'un réseau IMS souhaite placer un appel audio et vidéo vers un autre usager B du même réseau IMS.

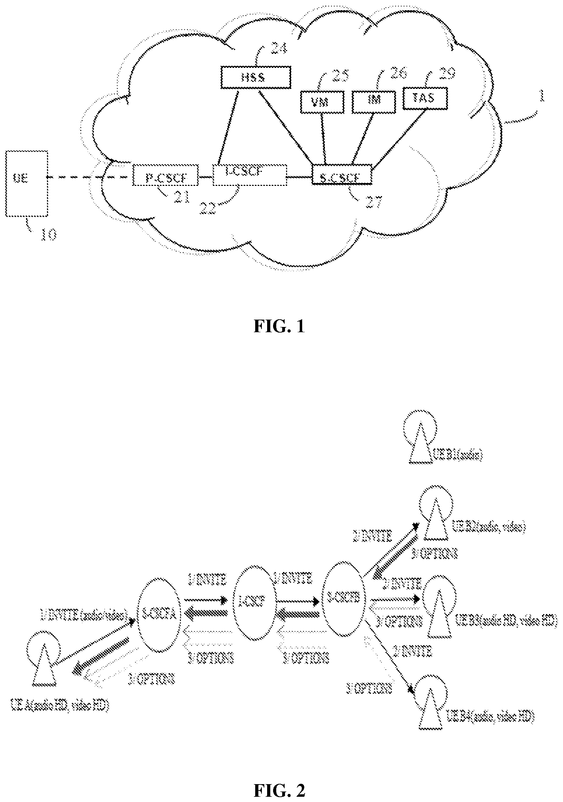

Bien que la présente invention concerne les réseaux IP en général, on va considérer à présent, à titre d'exemple de réalisation, une architecture de réseau de type IMS, telle que présentée succinctement ci-dessus. Cette architecture est illustrée sur la **figure 1****.**

Les services multimédia offerts par ce réseau IMS 1 peuvent comprendre des services de téléphonie, de vidéo-téléphonie, de partage de contenu (« *content-sharing »* en anglais), de Présence, de Messagerie Instantanée, ou de télévision. Ces services sont à la disposition de l'utilisateur d'un dispositif-client (« *User Equipment »,* ou UE en anglais) 10 appartenant au réseau 1, qui permet au dispositif-client 10 d'échanger des flux multimédias et des signaux de contrôle de session conformes au protocole SIP, par exemple avec le dispositif-client (non représenté) d'un usager appartenant à un réseau SIP (non représenté) relié au réseau 1.

Le dispositif-client 10 peut être un terminal fixe ou mobile, ou une passerelle domestique ou d'entreprise, disposant de moyens de signalisation SIP et pouvant comprendre des moyens de restitution d'un contenu audiovisuel.

Comme le montre la figure 1, ce réseau IMS 1 comprend, outre une infrastructure de transport IP (non représentée) :
- au moins un serveur S-CSCF ; le serveur S-CSCF 27 gère notamment la procédure d'enregistrement des dispositifs connectés au réseau 1 ; le serveur S-CSCF 27 gère également le routage de la signalisation entre le dispositif-client 10 et les serveurs de messagerie vocale VM 25, de Messagerie Instantanée 26, et de téléphonie TAS 29 ;
- au moins un serveur I-CSCF ; le serveur I-CSCF 22 gère notamment le routage en direction d'autres terminaux gérés par le même réseau IMS 1 et le routage de la signalisation entre ce réseau IMS 1 et d'autres réseaux (non représentés) ;

- au moins un serveur P-CSCF ; le serveur P-CSCF 21 sert d'entité de raccordement entre le coeur de réseau IMS et le réseau d'accès utilisé par le dispositif-client 10 ;
- au moins un serveur de base de données, de type HSS ; le serveur HSS 24 contient le profil de l'utilisateur du dispositif-client 10 en termes de données d'authentification, de localisation et de services souscrits ;
- au moins un serveur VM 25 de messagerie vocale (« *message-summary »* en anglais) ; le serveur VM 25 gère la souscription du dispositif-client 10 aux événements de dépôt/consultation des messages à l'intention du dispositif-client 10, et notifie le dispositif-client 10 lors de l'occurrence de ces événements ;
- au moins un serveur de Messagerie Instantanée IM 26 ; en cas de souscription de l'utilisateur de l'UE 10 au service de Messagerie Instantanée, cet utilisateur peut dialoguer « instantanément » en ligne avec d'autres abonnés à ce service ; et
- au moins un serveur de téléphonie TAS 29 ; le serveur TAS gère les services téléphoniques auxquels l'utilisateur du terminal 10 a souscrits auprès de son opérateur, tels que la présentation du numéro ou le renvoi d'appel.

Les serveurs de messagerie vocale VM 25, de Messagerie Instantanée IM 26, et de téléphonie TAS 29 sont des exemples de Serveurs d'Applications (AS).

Certains services, comme ceux du serveur VM 25 et du serveur de Messagerie Instantanée IM 26, s'appuient sur la souscription du terminal 10 à des événements prédéterminés, comme expliqué ci-dessus.

On va décrire à présent, en référence à la **figure 2****,** plusieurs modes de réalisation de l'invention, dans lesquels on suppose qu'un usager A d'un réseau IMS souhaite placer, par exemple, un appel audio et vidéo vers un autre usager B du même réseau IMS.

Selon un premier mode de réalisation, on met en oeuvre les étapes suivantes.

Lors d'une étape E1, le terminal du premier usager A émet une requête SIP de type OPTIONS à destination du second usager B. Cette requête comprend un en-tête (« *header»* en anglais) contenant un indicateur selon l'invention (que l'on appellera « reversecap ») ; cet indicateur peut, par exemple, être inséré dans un en-tête « Require » de la requête.

Comme expliqué ci-dessus en référence à la figure 1, la requête (OPTIONS en l'occurrence) émise par le terminal du premier usager A est transmise au serveur S-CSCF (appelé S-CSCFA sur la figure 2) en charge du premier usager A, puis au serveur I-CSCF aux fins de routage vers le serveur S-CSCF (appelé S-CSCFB sur la figure 2) en charge du second usager B. Le serveur S-CSCFB transmet alors la requête (mécanisme de *forking*) à l'ensemble des terminaux du second usager B connectés au réseau (en l'occurrence, B1 à B4).

Lors d'une étape E2, du fait de la présence dans la requête émise par le premier usager A de l'indicateur « reversecap », chaque terminal respectif du second usager B (c'est-à-dire, de B1 à B4) répond à la requête OPTIONS émise par le premier usager A en émettant à son tour à destination du premier usager A une requête OPTIONS indiquant les capacités techniques, et comprenant un identifiant respectif (par exemple l'étiquette classique « +sip.instance »), de ce terminal respectif.

Lors d'une étape E3, le terminal du premier usager A analyse les informations de capacités techniques contenues dans ces requêtes OPTIONS, et sélectionne l'un d'eux sur la base de ces informations et, optionnellement, de critères prédéterminés. De préférence, le terminal du premier usager A sélectionne le terminal du second usager B apte à rendre un service optimal selon des critères prédéterminés ; ainsi, dans le présent exemple, le terminal du premier usager A pourrait sélectionner le terminal B3, car ce terminal (et lui seul) est compatible avec une session audio HD et vidéo HD, dans le cas où ces caractéristiques seraient souhaitables pour le premier usager A par rapport à une session audio ou vidéo de définition standard ou faible.

Lors d'une étape E4, le terminal du premier usager A envoie une requête INVITE au terminal sélectionné (dans le présent exemple, le terminal B3), en utilisant, dans cette requête INVITE, l'étiquette « +sip.instance » de manière classique pour viser le terminal sélectionné.

Enfin, lors d'une étape E5, le terminal du premier usager A et le terminal B3 entrent en session audio-vidéo HD.

Selon un deuxième mode de réalisation, on met en oeuvre les étapes suivantes.

Lors d'une étape E'1, le terminal du premier usager A émet une requête SIP de type INVITE vers le second usager B. Cette requête comprend un en-tête contenant l'indicateur « reversecap » selon l'invention.

Cette requête mentionne en outre un service (dans le présent exemple, une session audio et vidéo) que l'usager A souhaite obtenir au cours de la session en cours d'établissement. Pour ce faire, comme défini dans les documents RFC 3840 et RFC 3841 de l'IETF, le terminal du premier usager A insère par exemple, dans les en-têtes « Contact » et « Accept-contact » de sa requête, le *featuretag* « audio » et le *featuretag* « vidéo » désignant les services souhaités. De même, le cas échéant, le *featuretag* « mmtel » désignerait un service téléphonique, le *featuretag* « sip-im » désignerait un service de messagerie instantanée, et ainsi de suite.

Lors d'une étape E'2, la requête INVITE émise par le terminal du premier usager A est transmise au serveur S-CSCFA, puis au serveur I-CSCF, et enfin au serveur S-CSCFB. Mais, conformément aux spécifications du document RFC 3841 de l'IETF, le serveur S-CSCFB ne transmet la requête qu'aux terminaux du second usager B techniquement aptes pour une session audio et vidéo ; ainsi, les terminaux B2, B3 et B4 reçoivent la requête, mais le terminal B1 ne la reçoit pas car ce terminal est techniquement apte pour une session audio, mais pas pour une session vidéo.

Lors d'une étape E'3, du fait de la présence, dans la requête émise par le premier usager A, de l'indicateur « reversecap », chacun des terminaux du second usager B ayant reçu la requête INVITE émise par le premier usager A (en l'occurrence, les terminaux B2, B3 et B4) répond au premier usager A au moyen d'une requête de type OPTIONS indiquant ses capacités techniques.

L'étape E'4 est analogue à l'étape E3 décrite ci-dessus en référence au premier mode de réalisation.

Lors d'une étape E'5, le terminal du premier usager A répond :
- favorablement (réponse SIP 200 OK) à la requête OPTIONS envoyée par le terminal sélectionné (B3 dans le présent exemple), qui va continuer à présenter l'appel (par exemple, sonnerie d'appel), et
- défavorablement (par exemple, au moyen d'un code d'erreur spécifique à la présente invention) aux requêtes OPTIONS envoyées par les autres terminaux du second usager B (B2 et B4 dans le présent exemple), qui répondent alors à la requête INVITE reçue lors de l'étape E'2 en indiquant (par exemple, au moyen d'un code SIP 487) qu'ils mettent fin à l'appel en cours.

On peut prévoir que, pendant la phase de sélection d'un terminal du second usager B, les terminaux du second usager B ayant reçu la requête INVITE lors de l'étape E'2 sonnent, ou prévoir au contraire qu'ils ne sonnent pas (par exemple sur détection de la présence de l'indicateur « reversecap » dans l'en-tête « Require ») de sorte que seul le terminal sélectionné se mettra à sonner (après réception de la réponse 200 OK envoyée par le premier usager A).

Enfin, lors d'une étape E'6, le terminal du premier usager A et le terminal B3 entrent en session audio-vidéo HD.

Selon un troisième mode de réalisation, on met en oeuvre les étapes suivantes.

Lors d'une étape E"1, le terminal du premier usager A émet une requête SIP de type INVITE à destination du second usager B. Cette requête mentionne un service (dans le présent exemple, une session audio et vidéo) que l'usager A souhaite obtenir au cours de la session en cours d'établissement, en insérant par exemple le *featuretag* « audio » et le *featuretag* « video » dans les en-têtes « Contact » et « Accept-contact » de sa requête.

Mais, contrairement au premier et au deuxième mode de réalisation, cette première requête émise par le premier usager A ne contient pas d'indicateur selon l'invention.

L'étape E"2 est analogue à l'étape E'2 décrite ci-dessus en référence au deuxième mode de réalisation.

Lors d'une étape E"3, le premier usager A reçoit des réponses de type « provisoire » (codes SIP 100 à 199) de la part de chacun des terminaux du second usager B ayant reçu la requête INVITE émise par le premier usager A (en l'occurrence, les terminaux B2, B3 et B4).

Lors d'une étape E"4, le premier usager A émet une deuxième requête SIP, par exemple une requête de type UPDATE comprenant un en-tête contenant l'indicateur « reversecap » selon l'invention, ou d'un type (que l'on appellera « REVOPTIONS ») spécifique à la présente invention, à destination des terminaux qui lui ont répondu (en l'occurrence, les terminaux B2, B3 et B4).

Lors d'une étape E"5, chacun des terminaux du second usager B ayant reçu la deuxième requête émise par le premier usager A (en l'occurrence, les terminaux B2, B3 et B4) répond donc au premier usager A au moyen d'une requête de type OPTIONS indiquant ses capacités techniques.

On met ensuite en oeuvre des étapes E"6 à E"8, qui sont respectivement analogues aux étapes E'4 à E'6 décrites ci-dessus en référence au deuxième mode de réalisation.

Dans l'exemple que l'on vient de décrire selon trois modes de réalisation, on a supposé que, non seulement plusieurs terminaux du second usager B étaient aptes à rendre le service souhaité par le premier usager A, mais que de surcroît l'un de ces terminaux (à savoir B3) était apte à rendre un service de qualité optimale (audio HD et vidéo HD).

Mais dans un autre cas de figure, il pourrait naturellement se produire *qu'aucun* des terminaux du second usager B ne soit apte à rendre le service souhaité par le premier usager A. On peut prévoir que, dans un tel cas, le terminal du premier usager A sélectionnera le terminal de B le plus apte à fournir au premier usager A un service de qualité réduite, selon des critères prédéterminés. Le terminal du premier usager A est en effet apte à opérer cette sélection suite à la réception des capacités des terminaux B comme décrit ci-dessus.

De manière générale, la présente invention peut être mise en oeuvre au sein des noeuds d'un réseau IP, par exemple des dispositifs-client, au moyen de composants logiciels et/ou matériels.

Les composants logiciels pourront être intégrés à un programme d'ordinateur classique de gestion de noeud de réseau. C'est pourquoi, comme indiqué ci-dessus, la présente invention concerne également un système informatique. Ce système informatique comporte de manière classique une unité centrale de traitement commandant par des signaux une mémoire, ainsi qu'une unité d'entrée et une unité de sortie. De plus, ce système informatique peut être utilisé pour exécuter un programme d'ordinateur comportant des instructions pour la mise en oeuvre de l'un quelconque des procédés de sélection selon l'invention.

En effet, l'invention vise aussi un programme d'ordinateur téléchargeable depuis un réseau de communication comprenant des instructions pour l'exécution des étapes d'un procédé de sélection selon l'invention, lorsqu'il est exécuté sur un ordinateur. Ce programme d'ordinateur peut être stocké sur un support lisible par ordinateur et peut être exécutable par un microprocesseur.

Ce programme peut utiliser n'importe quel langage de programmation, et se présenter sous la forme de code source, code objet, ou de code intermédiaire entre code source et code objet, tel que dans une forme partiellement compilée, ou dans n'importe quelle autre forme souhaitable.

L'invention vise aussi un support d'informations, inamovible, ou partiellement ou totalement amovible, lisible par un ordinateur, et comportant des instructions d'un programme d'ordinateur tel que mentionné ci-dessus.

Le support d'informations peut être n'importe quelle entité ou dispositif capable de stocker le programme. Par exemple, le support peut comprendre un moyen de stockage, tel qu'une ROM, par exemple un CD ROM ou une ROM de circuit microélectronique, ou un moyen d'enregistrement magnétique, tel qu'un disque dur, ou encore une clé USB (« *USB flash drive »* en anglais).

D'autre part, le support d'informations peut être un support transmissible tel qu'un signal électrique ou optique, qui peut être acheminé via un câble électrique ou optique, par radio ou par d'autres moyens. Le programme d'ordinateur selon l'invention peut être en particulier téléchargé sur un réseau de type Internet.

En variante, le support d'informations peut être un circuit intégré dans lequel le programme est incorporé, le circuit étant adapté pour exécuter ou pour être utilisé dans l'exécution de l'un quelconque des procédés de sélection selon l'invention.

## Revendications

1. Procédé d'obtention, par un premier usager d'un réseau IP, de capacités techniques d'un dispositif-client parmi une pluralité de dispositifs-client d'un second usager connectés audit réseau IP, ledit réseau IP mettant en oeuvre un protocole de contrôle de session utilisant des messages de signalisation de type requête et de type réponse, ledit procédé comprenant les étapes suivantes :
a) un dispositif-client dudit premier usager émet (E1, E'1, E"4) un dit premier message de signalisation de type requête (INVITE, UPDATE, REVOPTIONS, OPTIONS) à destination dudit second usager, ledit premier message étant d'un type dédié (REVOPTIONS) ou comprenant un en-tête contenant un indicateur (reversecap) dédié, et
b) chacun des dispositifs-client du second usager ayant reçu ledit premier message d'un type dédié (REVOPTIONS) ou comprenant un en-tête contenant un indicateur (reversecap) dédié, et répond (E2, E'3, E"5) au premier usager au moyen d'un dit second message de signalisation de type requête (OPTIONS) du fait dudit type dédié ou dudit indicateur dédié, ledit second message de type requête indiquant les capacités techniques de ce dispositif-client du second usager et requérant la fourniture, par ledit dispositif-client du premier usager, des capacités techniques de ce dispositif-client du premier usager.

2. Procédé d'obtention selon la revendication 1, **caractérisé en ce qu'**il comprend en outre les étapes suivantes :
c) après réception desdites seconds messages de type requête (OPTIONS) envoyées par chacun des dispositifs-client du second usager ayant reçu ledit premier message d'un type dédié (REVOPTIONS) ou comprenant un en-tête contenant un indicateur (reversecap) dédié, le dispositif-client du premier usager sélectionne (E'4, E"6, E3) l'un de ces dispositifs-clients du second usager sur la base au moins des capacités techniques contenues dans ces seconds messages (OPTIONS),
d) le dispositif-client du premier usager émet (E4, E'5, E"7), à destination du dispositif-client sélectionné, une réponse favorable (200 OK, INVITE) au second message de type requête (OPTIONS) émis lors de ladite étape b) par ce dispositif-client sélectionné, et
e) le dispositif-client du premier usager et le dispositif-client sélectionné entrent (E5, E'6, E"8) en session.

3. Procédé d'obtention selon la revendication 2, **caractérisé en ce que** :
- le second message de type requête (OPTIONS) émis (E2) par chaque dispositif-client respectif du second usager lors de ladite étape b) comprend un identifiant respectif de ce dispositif-client, et
- le dispositif-client du premier usager insère (E4) l'identifiant dudit dispositif-client sélectionné dans la réponse (INVITE) émise lors de ladite étape d) à destination de ce dispositif-client sélectionné.

4. Procédé d'obtention selon la revendication 2, **caractérisé en ce que** :
- ledit premier message de type requête (INVITE) émis par le dispositif-client du premier usager lors de ladite étape a) mentionne (E'1) un service que le premier usager souhaite obtenir au cours de la session en cours d'établissement, et
- lors de ladite étape d), le dispositif-client du premier usager émet (E'5) une réponse défavorable aux seconds messages de type requête (OPTIONS) envoyés lors de ladite étape b) par les dispositifs-clients du second usager non sélectionnés.

5. Procédé d'obtention selon la revendication 2, **caractérisé en ce que** :
- préalablement à ladite étape a), le dispositif-client du premier usager émet (E"1), à destination dudit second usager, un message de type requête (INVITE) mentionnant un service que le premier usager souhaite obtenir au cours de la session en cours d'établissement, et
- lors de ladite étape d), le dispositif-client du premier usager émet (E"7) une réponse défavorable aux seconds messages de type requête (OPTIONS) envoyés lors de ladite étape b) par les dispositifs-clients du second usager non sélectionnés.

6. Procédé d'obtention selon la revendication 2, **caractérisé en ce que**, si aucun dispositif-client du second usager ayant émis lors de ladite étape b) un second message de type requête (OPTIONS) indiquant ses capacités techniques n'est techniquement apte à fournir un service souhaité par le premier usager, le dispositif-client du premier usager sélectionne parmi ces dispositifs-clients du second usager, lors de ladite étape c), celui qui est le plus apte à fournir au premier usager un service de qualité réduite.

7. Dispositif-client d'un usager, dit premier usager, d'un réseau IP mettant en oeuvre un protocole de contrôle de session utilisant des messages de signalisation de type requête et de type réponse, possédant :
des moyens pour émettre, à destination d'un second usager du réseau IP, un dit premier message de signalisation de type requête (INVITE, UPDATE, REVOPTIONS, OPTIONS) d'un type dédié (REVOPTIONS) ou comprenant un en-tête contenant un indicateur (reversecap) dédié, ledit type dédié (REVOPTIONS) ou indicateur dédié (reversecap) étant apte à déclencher une réponse audit premier message, de la part de chacun des dispositifs-client dudit second usager ayant reçu ledit premier message, au moyen d'un dit second message de signalisation de type requête fournissant ses capacités techniques ;
des moyens pour recevoir le second message de type requête (OPTIONS) de la part de chacun des dispositifs-client du second usager ayant reçu le premier message de type requête, ledit second message de type requête indiquant les capacités techniques dudit dispositif-client du second usager et requérant la fourniture, par ledit dispositif-client du premier usager, des capacités techniques de ce dispositif-client du premier usager ; et
des moyens pour, sur la base au moins desdites informations de capacités techniques reçues, sélectionner un des dispositifs-client dudit second usager ayant répondu au premier message de type requête et émettre à destination du dispositif-client sélectionné du second usager, une réponse favorable (200 OK, INVITE) audit second message de type requête reçu de ce dispositif-client sélectionné du second usager.

8. Dispositif-client d'un usager, dit second usager, d'un réseau IP mettant en oeuvre un protocole de contrôle de session utilisant des messages de signalisation de type requête et de type réponse, possédant des moyens pour :
- recevoir un dit premier message de signalisation de type requête (INVITE, UPDATE, REVOPTIONS, OPTIONS) émis par un dispositif-client d'un autre usager, dit premier usager, dudit réseau IP, ledit premier message de type requête étant d'un type dédié (REVOPTIONS) ou comprenant un en-tête contenant un indicateur (reversecap) dédié, et ledit type dédié (REVOPTIONS) ou indicateur dédié (reversecap) étant apte à déclencher une réponse audit premier message, de la part d'un de chacun des dispositifs-client dudit second usager ayant reçu ledit premier message, au moyen d'un dit second message de signalisation de type requête fournissant ses capacités techniques,
- répondre audit message de type requête de type dédié ou comprenant un en-tête contenant un indicateur dédié en émettant un dit message de signalisation de type requête (OPTIONS) du fait dudit type dédié ou dudit indicateur dédié, ledit message de signalisation de type requête indiquant ses capacités techniques et requérant la fourniture, par ledit dispositif-client du premier usager, des capacités techniques de ce dispositif-client du premier usager.

9. Moyen de stockage de données inamovible, ou partiellement ou totalement amovible, comportant des instructions de code de programme informatique pour l'exécution des étapes d'un procédé d'obtention selon l'une quelconque des revendications 1 à 6.

10. Programme d'ordinateur téléchargeable depuis un réseau de communications et/ou stocké sur un support lisible par ordinateur et/ou exécutable par un microprocesseur, **caractérisé en ce qu'**il comprend des instructions pour l'exécution des étapes d'un procédé d'obtention selon l'une quelconque des revendications 1 à 6, lorsqu'il est exécuté sur un ordinateur.

## Patentansprüche

1. Verfahren zum Erhalten, durch einen ersten Benutzer eines IP-Netzwerks, von technischen Fähigkeiten einer Client-Vorrichtung einer Vielzahl von Client-Vorrichtungen eines zweiten Benutzers, die mit dem IP-Netzwerk verbunden sind, wobei das IP-Netzwerk ein Sitzungssteuerungsprotokoll umsetzt, das Signalisierungsnachrichten vom Typ Anfrage und vom Typ Antwort verwendet, wobei das Verfahren die folgenden Schritte beinhaltet:
a) eine Client-Vorrichtung des ersten Benutzers sendet (E1, E'1, E"4) eine sogenannte erste Signalisierungsnachricht vom Typ Anfrage (INVITE, UPDATE, REVOPTIONS, OPTIONS) an den zweiten Benutzer, wobei die erste Nachricht von einem dedizierten Typ (REVOPTIONS) ist oder einen Header beinhaltet, der einen dedizierten Indikator (reversecap) enthält, und
b) jede der Client-Vorrichtungen des zweiten Benutzers, die die erste Nachricht, die von einem dedizierten Typ (REVOPTIONS) ist oder einen Header beinhaltet, der einen dedizierten Indikator (reversecap) enthält, erhalten hat, antwortet (E2, E'3, E"5) dem ersten Benutzer mittels einer sogenannten zweiten Signalisierungsnachricht vom Typ Anfrage (OPTIONS) aufgrund des dedizierten Typs oder des dedizierten Indikators, wobei die zweite Nachricht vom Typ Anfrage die technischen Fähigkeiten dieser Client-Vorrichtung des zweiten Benutzers angibt und die Bereitstellung, durch die Client-Vorrichtung des ersten Benutzers, der technischen Fähigkeiten dieser Client-Vorrichtung des ersten Benutzers anfragt.

2. Verfahren zum Erhalten nach Anspruch 1, **dadurch gekennzeichnet, dass** es ferner die folgenden Schritte beinhaltet:
c) nach Empfang der zweiten Nachrichten vom Typ Anfrage (OPTIONS), die durch jede der Client-Vorrichtungen des zweiten Benutzers geschickt werden, die die erste Nachricht, die von einem dedizierten Typ (REVOPTIONS) ist oder einen Header beinhaltet, der einen dedizierten Indikator (reversecap) enthält, erhalten hat, wählt (E'4, E"6, E3) die Client-Vorrichtung des ersten Benutzers eine dieser Client-Vorrichtungen des zweiten Benutzers auf der Basis mindestens der technischen Fähigkeiten aus, die in diesen zweiten Nachrichten (OPTIONS) enthalten sind,
d) die Client-Vorrichtung des ersten Benutzers sendet (E4, E'5, E"7), an die ausgewählte Client-Vorrichtung, eine positive Antwort (200 OK, INVITE) auf die zweite Nachricht vom Typ Anfrage (OPTIONS), die während des Schritts b) durch diese ausgewählte Client-Vorrichtung gesendet wurde, und
e) die Client-Vorrichtung des ersten Benutzers und die ausgewählte Client-Vorrichtung beginnen (E5, E'6, E"8) eine Sitzung.

3. Verfahren zum Erhalten nach Anspruch 2, **dadurch gekennzeichnet, dass**:
- die zweite Nachricht vom Typ Anfrage (OPTIONS), die während des Schritts b) durch jede jeweilige Client-Vorrichtung des zweiten Benutzers gesendet (E2) wird, eine jeweilige Kennung dieser Client-Vorrichtung beinhaltet und
- die Client-Vorrichtung des ersten Benutzers die Kennung der ausgewählten Client-Vorrichtung in die Antwort (INVITE) einfügt (E4), die während des Schritts d) an diese ausgewählte Client-Vorrichtung gesendet wird.

4. Verfahren zum Erhalten nach Anspruch 2, **dadurch gekennzeichnet, dass**:
- die erste Nachricht vom Typ Anfrage (INVITE), die durch die Client-Vorrichtung des ersten Benutzers während des Schritts a) gesendet wird, einen Dienst spezifiziert (E'1), den der erste Benutzer während der in Erstellung befindlichen Sitzung erhalten möchte, und
- während des Schritts d) die Client-Vorrichtung des ersten Benutzers eine negative Antwort auf die zweiten Nachrichten vom Typ Anfrage (OPTIONS), die während des Schritts b) durch die nicht ausgewählten Client-Vorrichtungen des zweiten Benutzers geschickt wurden, sendet (E'5).

5. Verfahren zum Erhalten nach Anspruch 2, **dadurch gekennzeichnet, dass**:
- vor dem Schritt a) die Client-Vorrichtung des ersten Benutzers eine Nachricht vom Typ Anfrage (INVITE) an den zweiten Benutzer sendet (E"1), die einen Dienst spezifiziert, den der erste Benutzer während der in Erstellung befindlichen Sitzung erhalten möchte, und
- während des Schritts d) die Client-Vorrichtung des ersten Benutzers eine negative Antwort auf die zweiten Nachrichten vom Typ Anfrage (OPTIONS), die während des Schritts b) durch die nicht ausgewählten Client-Vorrichtungen des zweiten Benutzers geschickt wurden, sendet (E"7).

6. Verfahren zum Erhalten nach Anspruch 2, **dadurch gekennzeichnet, dass**, wenn keine Client-Vorrichtung des zweiten Benutzers, die während des Schritts b) eine zweite Nachricht vom Typ Anfrage (OPTIONS), die ihre technischen Fähigkeiten angibt, gesendet hat, technisch dazu in der Lage ist, einen durch den ersten Benutzer gewünschten Dienst bereitzustellen, die Client-Vorrichtung des ersten Benutzers aus diesen Client-Vorrichtungen des zweiten Benutzers während des Schritts c) diejenige auswählt, die am ehesten dazu in der Lage ist, dem ersten Benutzer einen Dienst mit reduzierter Qualität bereitzustellen.

7. Client-Vorrichtung eines Benutzers, als erster Benutzer bezeichnet, eines IP-Netzwerks, das ein Sitzungssteuerungsprotokoll umsetzt, das Signalisierungsnachrichten vom Typ Anfrage und vom Typ Antwort verwendet, die Folgendes besitzt:
Mittel zum Senden, an einen zweiten Benutzer des IP-Netzwerks, einer sogenannten ersten Signalisierungsnachricht vom Typ Anfrage (INVITE, UPDATE, REVOPTIONS, OPTIONS), die von einem dedizierten Typ (REVOPTIONS) ist oder einen Header beinhaltet, der einen dedizierten Indikator (reversecap) enthält, wobei der dedizierte Typ (REVOPTIONS) oder der dedizierte Indikator (reversecap) dazu in der Lage ist, eine Antwort auf die erste Nachricht von jeder der Client-Vorrichtungen des zweiten Benutzers, die die erste Nachricht empfangen hat, mittels einer sogenannten zweiten Signalisierungsnachricht vom Typ Anfrage, die ihre technischen Fähigkeiten bereitstellt, auszulösen;
Mittel zum Empfangen der zweiten Nachricht vom Typ Anfrage (OPTIONS) von jeder der Client-Vorrichtungen des zweiten Benutzers, die die erste Nachricht vom Typ Anfrage empfangen hat, wobei die zweite Nachricht vom Typ Anfrage die technischen Fähigkeiten der Client-Vorrichtung des zweiten Benutzers angibt und die Bereitstellung, durch die Client-Vorrichtung des ersten Benutzers, der technischen Fähigkeiten dieser Client-Vorrichtung des ersten Benutzers anfragt; und
Mittel, um auf der Basis mindestens der empfangenen Informationen über technische Fähigkeiten eine der Client-Vorrichtungen des zweiten Benutzers, die auf die erste Nachricht vom Typ Anfrage geantwortet hat,
auszuwählen und an die ausgewählte Client-Vorrichtung des zweiten Benutzers eine positive Antwort (200 OK, INVITE) auf die zweite Nachricht vom Typ Anfrage, die von dieser ausgewählten Client-Vorrichtung des zweiten Benutzers empfangen wurde, zu senden.

8. Client-Vorrichtung eines Benutzers, als zweiter Benutzer bezeichnet, eines IP-Netzwerks, das ein Sitzungssteuerungsprotokoll umsetzt, das Signalisierungsnachrichten vom Typ Anfrage und vom Typ Antwort verwendet, die Mittel für Folgendes besitzt:
- Empfangen einer sogenannten ersten Signalisierungsnachricht vom Typ Anfrage (INVITE, UPDATE, REVOPTIONS, OPTIONS), die durch eine Client-Vorrichtung eines anderen Benutzers, als erster Benutzer bezeichnet, des IP-Netzwerks gesendet wird, wobei die erste Nachricht vom Typ Anfrage von einem dedizierten Typ (REVOPTIONS) ist oder einen Header beinhaltet, der einen dedizierten Indikator (reversecap) enthält, und wobei der dedizierte Typ (REVOPTIONS) oder der dedizierte Indikator (reversecap) dazu in der Lage ist, eine Antwort auf die erste Nachricht von jeder der Client-Vorrichtungen des zweiten Benutzers, die die erste Nachricht empfangen hat, mittels einer sogenannten zweiten Signalisierungsnachricht vom Typ Anfrage, die ihre technischen Fähigkeiten bereitstellt, auszulösen,
- Antworten auf die Nachricht vom Typ Anfrage, die von einem dedizierten Typ ist oder einen Header beinhaltet, der einen dedizierten Indikator enthält, durch das Senden einer sogenannten Signalisierungsnachricht vom Typ Anfrage (OPTIONS) aufgrund des dedizierten Typs oder des dedizierten Indikators, wobei die Signalisierungsnachricht vom Typ Anfrage ihre technischen Fähigkeiten angibt und die Bereitstellung, durch die Client-Vorrichtung des ersten Benutzers, der technischen Fähigkeiten dieser Client-Vorrichtung des ersten Benutzers anfragt.

9. Nicht entnehmbares oder teilweise oder vollständig entnehmbares Datenspeichermedium, das Computerprogrammcodeanweisungen zum Ausführen der Schritte eines Verfahrens zum Erhalten nach einem der Ansprüche 1 bis 6 beinhaltet.

10. Computerprogramm, das über ein Kommunikationsnetz herunterladbar ist und/oder auf einem computerlesbaren Medium gespeichert ist und/oder von einem Mikroprozessor ausführbar ist, **dadurch gekennzeichnet, dass** es Anweisungen umfasst, die bei seiner Ausführung auf einem Computer die Schritte eines Verfahrens zum Erhalten nach einem der Ansprüche 1 bis 6 ausführen.

## Claims

1. Method of obtainment, by a first user of an IP network, of technical capabilities of a client device among a plurality of client devices of a second user, said client devices being connected to said IP network, said IP network implementing a session control protocol using signalling messages of request type and response type, said method comprising the following steps:
a) a client device of said first user sends (E1, E'1, E"4) a said first signalling message of request type (INVITE, UPDATE, REVOPTIONS, OPTIONS) to said second user, said first message being of a dedicated type (REVOPTIONS) or comprising a header containing a dedicated indicator (reversecap), and
b) each of the client devices of the second user having received said first message of a dedicated type (REVOPTIONS) or comprising a header containing a dedicated indicator (reversecap), responds (E2, E'3, E"5) to the first user by means of a said second signalling message of request type (OPTIONS) as a result of said dedicated type or of said dedicated indicator, said second message of request type indicating the technical capabilities of this client device of the second user and requesting delivery, by said client device of the first user, of the technical capabilities of this client device of the first user.

2. Obtainment method according to Claim 1, **characterized in that** it further comprises the following steps:
c) after receipt of said second messages of request type (OPTIONS) sent by each of the client devices of the second user having received said first message of a dedicated type (REVOPTIONS) or comprising a header containing a dedicated indicator (reversecap), the client device of the first user selects (E'4, E"6, E3) one of these client devices of the second user on the basis at least of the technical capabilities contained in these second messages (OPTIONS),
d) the client device of the first user sends (E4, E'5, E"7), to the selected client device, a favourable response (200 OK, INVITE) to the second message of request type (OPTIONS) sent in said step b) by this selected client device, and
e) a session is set up (E5, E'6, E"8) between the client device of the first user and the selected client device.

3. Obtainment method according to Claim 2, **characterized in that**:
- the second message of request type (OPTIONS) sent (E2) by each respective client device of the second user in said step b) comprises a respective identifier of this client device, and
- the client device of the first user inserts (E4) the identifier of said selected client device into the response (INVITE) sent in said step d) to this selected client device.

4. Obtainment method according to Claim 2, **characterized in that**:
- said first message of request type (INVITE) sent by the client device of the first user in said step a) mentions (E'1) a service that the first user desires to obtain during the session being set up, and
- in said step d), the client device of the first user sends (E'5) an unfavourable response to the second messages of request type (OPTIONS) sent in said step b) by the client devices of the second user that are not selected.

5. Obtainment method according to Claim 2, **characterized in that**:
- prior to said step a), the client device of the first user sends (E"1), to said second user, a message of request type (INVITE) mentioning a service that the first user desires to obtain during the session being set up, and
- in said step d), the client device of the first user sends (E"7) an unfavourable response to the second messages of request type (OPTIONS) sent in said step b) by the client devices of the second user that are not selected.

6. Obtainment method according to Claim 2, **characterized in that**, if no client device of the second user having sent in said step b) a second message of request type (OPTIONS) indicating its technical capabilities is technically capable of delivering a service desired by the first user, the client device of the first user selects from these client devices of the second user, in said step c), the client device that is best able to deliver to the first user a service of reduced quality.

7. Client device of a user, called the first user, of an IP network implementing a session control protocol using signalling messages of request type and of response type, possessing:
means for sending, to a second user of the IP network, a said first signalling message of request type (INVITE, UPDATE, REVOPTIONS, OPTIONS) of a dedicated type (REVOPTIONS) or comprising a header containing a dedicated indicator (reversecap), said dedicated type (REVOPTIONS) or dedicated indicator (reversecap) being capable of triggering a response to said first message, from each of the client devices of said second user having received said first message, by means of a said second signalling message of request type delivering its technical capabilities;
means for receiving the second message of request type (OPTIONS) from each of the client devices of the second user having received the first message of request type, said second message of request type indicating the technical capabilities of said client device of the second user and requesting delivery, by said client device of the first user, of the technical capabilities of this client device of the first user; and
means for, on the basis at least of said received information on technical capabilities, selecting one of the client devices of said second user having responded to the first message of request type and sending, to the selected client device of the second user, a favourable response (200 OK, INVITE) to said second message of request type received from this selected client device of the second user.

8. Client device of a user, called the second user, of an IP network implementing a session control protocol using signalling messages of request type and of response type, possessing means for:
- receiving a said first signalling message of request type (INVITE, UPDATE, REVOPTIONS, OPTIONS) sent by a client device of another user, called the first user, of said IP network, said first message of request type being of a dedicated type (REVOPTIONS) or comprising a header containing a dedicated indicator (reversecap), and said dedicated type (REVOPTIONS) or dedicated indicator (reversecap) being capable of triggering a response to said first message, from each of the client devices of said second user having received said first message, by means of a said second signalling message of request type delivering its technical capabilities,
- responding to said message of request type of dedicated type or comprising a header containing a dedicated indicator by sending a said signalling message of request type (OPTIONS) as a result of said dedicated type or of said dedicated indicator, said signalling message of request type indicating its technical capabilities and requesting delivery, by said client device of the first user, of the technical capabilities of this client device of the first user.

9. Fixed or partly or fully removable data storage means including computer program code instructions for executing the steps of an obtainment method according to any one of Claims 1 to 6.

10. Computer program downloadable from a communications network and/or stored on a computer-readable medium and/or able to be executed by a microprocessor, **characterized in that** it comprises instructions for executing the steps of an obtainment method according to any one of Claims 1 to 6 when it is executed on a computer.
